# EUROPÄISCHE PATENTSCHRIFT

(11) **EP 1 918 689 B1**
(45) Veröffentlichungstag und Bekanntmachung des Hinweises auf die Patenterteilung: **14.04.2010**
(21) Anmeldenummer: 07019796.7
(22) Anmeldetag: 10.10.2007
(51) Int. Cl.: G01M 17/10

(54) **Verfahren und Vorrichtung zum Positionieren eines Prüflings in einem Prüfstand für Drehgestelle von Schienenfahrzeugen**
Method and device for positioning a unit under test in a test bed for bogies of rail vehicles
Procédé et dispositif destinés au positionnement d'un échantillon dans un banc d'essai pour un bâti tournant de véhicules sur rails

(30) Priorität: 30.10.2006 DE 102006051725
(43) Veröffentlichungstag der Anmeldung: 07.05.2008
(73) Patentinhaber: Schenck Process GmbH, 64293 Darmstadt (DE)
(72) Erfinder: Matich, Walter, 64807 Dieburg (DE); Ehmke, Fritz, 64397 Modautal (DE)
(74) Vertreter: Radünz, Ingo

(56) Entgegenhaltungen:
- DE-A1- 3 641 424
- DE-A1-102004 021 488
- US-A- 4 793 047

## Beschreibung

Die Erfindung betrifft ein Verfahren zum Positionieren eines Prüflings in einem Prüfstand für Drehgestelle von Schienenfahrzeugen nach dem Oberbegriff des Patentanspruchs 1 und eine Vorrichtung nach dem Oberbegriff des Patentanspruchs 3.

Für den Fahrkomfort, den Verschleiß und insbesondere die Laufsicherheit von schienengebundenen Fahrzeugen ist es wesentlich und entscheidend, dass sich die Betriebslast, die auf Drehgestelle von Schienenfahrzeugen einwirkt, gleichmäßig auf die Laufräder verteilt. Ebenso sicherheitsrelevant in dem Zusammenhang sind geometrische Daten der Drehgestelle, wie zum Beispiel die Achsparallelität der Laufradsätze zueinander.

Aufgrund immer höherer Transitgeschwindigkeiten von Schienenfahrzeugen, beispielsweise von Inter-City-Express-Zügen der Baureihen ICE, steigt auch der Anspruch und das Bedürfnis, die Eigenschaften der Drehgestelle hinsichtlich der geometrischen Daten und der Verteilung der Radaufstandskräfte stets weiter zu verbessern.

Daher werden an ein Prüfverfahren für Drehgestelle von Schienenfahrzeugen sehr hohe Anforderungen hinsichtlich Genauigkeit, Bestimmtheit und Zuverlässigkeit der Daten gestellt, die von zugehörigen Messeinrichtungen aufgenommen werden.

Aus der DE 10 2004 021 488 A1 ist ein Prüfstand für Drehgestelle und/oder Radsätze von Schienenfahrzeugen mit zwei Gleisabschnitten bekannt, die ein durchgehendes Gleis bilden und längs hintereinander angeordnet sind. Der Prüfstand umfasst einen Prüftisch, wobei auf dem Prüftisch ein Gleisabschnitt angeordnet ist, der relativ zum anderen Gleisabschnitt in wenigstens zwei Richtungen beweglich ist.

Aus der US 4 793 047 A ist ein Verfahren bekannt, bei dem ein Prüfling in einem Prüfstand für Drehgestelle von Schienenfahrzeugen positioniert wird, wobei die Drehgestelle mit Laufrädern mit es entscheidend, das Drehgestell im Prüfstand so genau zu positionieren, dass die Prüfkraft symmetrisch in das Drehgestell eingeleitet wird und die Kraftausleitung an den Aufstandspunkten der Laufräder definiert und reproduzierbar erfolgt.

Das hochgenaue und reproduzierbare Positionieren des Drehgestells im Prüfstand ist somit die Grundlage und Voraussetzung für die genaue Ermittlung und Dokumentation von Daten über die Eigenschaften eines Drehgestells.

Der Erfindung liegt die Aufgabe zugrunde, ein Verfahren anzugeben, mit dem Prüflinge als Drehgestelle in einem automatisch ablaufenden Prüfverfahren hochgenau und reproduzierbar in einem Prüfstand für Drehgestelle zu positionieren sind, und eine Vorrichtung für ein solches Positionieren zu schaffen.

Die zugrundeliegende Aufgabe wird erfindungsgemäß für ein Verfahren mit den Merkmalen des Patentanspruchs 1 und für eine Vorrichtung mit den Merkmalen des Patentanspruchs 3 gelöst. Vorteilhafte Ausgestaltungen der Erfindung sind in den abhängigen Ansprüchen angegeben.

Dabei hat sich als besonders vorteilhaft herausgestellt, dass bei dem automatisch ablaufenden Prüfverfahren die Lage des Drehgestells nach Einbringen in den Prüfstand als Ist-Lage gemessen und erfasst und bei Bedarf automatisch in die Soll-Lage korrigiert wird.

Bevorzugt werden die Drehgestelle mit Laufrädern und angeformten Spurkränzen jeweils auf einer höhenverstellbaren Einfahrgleisvorrichtung in den Prüfstand eingebracht und ausgebracht. Der Prüfstand weist mindestens vier Positioniereinheiten und eine Belastungsvorrichtung auf. Bei dem vorteilhaften Verfahren werden die Positioniereinheiten mit angeordneten Aufnahmeprismen für die Laufräder auf einen vorbestimmten nominellen Achsabstand positioniert, während das Drehgestell auf den Spurkränzen der Laufräder über die Einfahrgleisvorrichtung in den Prüfstand eingefahren wird.

Einfahrgleisvorrichtung in den Prüfstand eingebracht und ausgebracht. Der Prüfstand weist mindestens vier Positioniereinheiten und eine Belastungsvorrichtung auf. Bei dem vorteilhaften Verfahren werden untere X-Schlitten der Positioniereinheiten mit unverschobenen Y-Schlitten und oberen X-Schlitten und angeordneten Aufnahmeprismen für die Laufräder auf einen vorbestimmten nominellen Achsabstand positioniert, während das Drehgestell auf den Spurkränzen der Laufräder über die Einfahrgleisvorrichtung in den Prüfstand eingefahren wird.

Dann wird die Einfahrgleisvorrichtung abgesenkt, und die Laufräder werden von den Aufnahmeprismen aufgenommen, und die oberen X-Schlitten der Positioniereinheiten werden exakt in Achsmitte zentriert.

Ein am jeweiligen oberen X-Schlitten, der seinerseits auf dem Y-Schlitten der Positioniereinheiten angeordnet ist, angebrachter Abstandssensor misst die Y-Lage jedes Laufrades (3) bezogen auf die Lage des jeweiligen Aufnahmeprismas als Ist-Lage, und eine jeweils am Y-Schlitten angebrachte Messeinrichtung misst die Y-Lagedes Y-Schlittens jeder Positioniereinheit gegenüber dem zugehörigen Laufrad des Drehgestells als Ist-Lage.

In einer zugehörigen zentralen Steuereinheit werden die gemessenen Daten verarbeitet und Korrekturgrößen für die exakte Y-Lage des Y-Schlittens der jeweiligen Positioniereinheit gegenüber dem jeweiligen Laufrad erfasst und als Soll-Lage gespeichert. Dann wird das Drehgestell über die Einfahrgleisvorrichtung angehoben und der Y-Schlitten der jeweiligen Positioniereinheit auf ein vorbestimmtes Signal der Steuereinheit hin exakt in die erfasste Y-Lage als Soll-Lage motorisch verstellt. Das Drehgestell wird anschließend über die Einfahrgleisvorrichtung wieder in die Aufnahmeprismen abgesenkt.

Zur genauen Positionierung misst eine Messeinrichtung am jeweiligen oberen X-Schlitten der jeweiligen Positioniereinheit die jeweilige X-Lage des oberen X-Schlittens der jeweiligen Positioniereinheit gegenüber der Position des unteren X-Schlittens der Positioniereinheit als Ist-Lage.

Die zentrale Steuereinheit erfasst und speichert aufgrund der gemessenen Daten der X-Lage notwendige Korrekturgrößen für die genaue X-Lage der Positioniereinheiten gegenüber den Laufrädern des Drehgestells im Prüfstand als Soll-Lage. Dann wird der untere X-Schlitten der jeweiligen Positioniereinheit auf ein vorbestimmtes Signal der Steuereinheit hin exakt in die erfasste X-Lage als Soll-Lage und der Y-Schlitten in Y-Richtung zur exakt rechtwinkligen Ausrichtung ohne ein Anheben des Drehgestells motorisch verstellt.

Weiterhin hat sich bei dem Verfahren als besonders vorteilhaft herausgestellt, dass beim Überschreiten einer vorbestimmten Toleranzgrenze, wenn über eine Messeinrichtung die Radaufstandskräfte gemessen werden, die durch Beaufschlagung des Drehgestells im Prüfstand mit der Belastungsvorrichtung aufgebracht werden, eine Korrektur auf einfache Weise vorgenommen werden kann. Dazu wird über die an Z-Hubeinrichtungen der jeweiligen Positioniereinheiten jeweils angebrachte Messeinrichtung eine Abweichung gegenüber einer vorbestimmten Position von der zentralen Steuereinheit erfasst. Über eine Simulation der Abweichung in Z-Richtung kann die erforderliche Stärke oder Dicke einer Abstandsscheibe zum Höhenausgleich der Radaufhängung von der zentralen Steuereinheit bestimmt werden.

Die Vorrichtung zum Positionieren eines Drehgestells im Prüfstand weist jeweils für jedes Laufrad des Drehgestells eine Positioniereinheit auf, die ein auf einem in X- und Y-Richtung beweglichen Schlitten angeordnetes Aufnahmeprisma und eine integrierte Messeinrichtung für das Messen der Radaufstandskraft sowie Messeinrichtungen zur Abstandsmessung und Wegmessung umfasst. Eine zentrale Steuereinheit ist zum Verarbeiten von gemessenen Daten und Erfassen von Korrekturgrößen und Speichern von zugehörigen Ist-/Soll-Lagen vorgesehen. Außerdem ist die Positioniereinheit in Z-Richtung verstellbar angeordnet.

Weitere Vorteile der Erfindung sind anhand des in der Zeichnung dargestellten Ausführungsbeispiels näher erläutert. Es zeigen:
Fig. 1 eine Prinzipskizze eines Prüfstandes für ein Drehgestell im verkleinerten Maßstab nach der Erfindung;
Fig.2 eine Einzelheit Z der Prinzipskizze nach Fig.1 in der X/Y-Ebene in der Ansicht Y-Achse im vergrößerten Maßstab nach der Erfindung und
Fig.3 eine Seitenansicht der Fig.2 gemäß Schnitt A - B in der X/Y-Ebene in der Ansicht X-Achse nach der Erfindung.

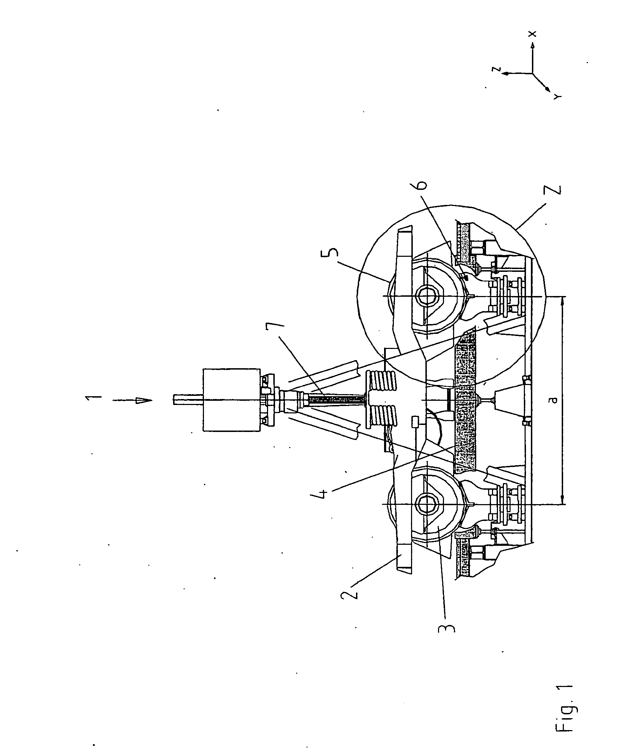

In Fig. 1 ist in einer Prinzipskizze ein Prüfstand 1 für ein Drehgestell 2 dargestellt. Das Drehgestell 2 weist mindestens vier Laufräder 3 mit jeweiligem Spurkranz 5 auf. Die Laufräder 3 ruhen jeweils auf einer zugehörigen X-/Y-/Z-Positioniereinheit 6. Zum Einbringen und Ausbringen des Drehgestells 2 ist eine höhenverstellbare Einfahrgleisvorrichtung 4 in dem Prüfstand 1 angeordnet. Weiterhin ist eine Belastungsvorrichtung 7 für das Drehgestell 2 in dem Prüfstand 1 dargestellt, welche die Belastung für das Drehgestell aufbringt. Dabei simuliert die Belastungsvorrichtung 7 das Gewicht eines Lokomotivkastens oder eines Reisezugwaggons, wobei sich die Radaufstandskräfte aus dem Eigengewicht des Drehgestells 2 und der Belastung durch die Belastungsvorrichtung 7 ergeben. Darüber hinaus ist ein Achsabstand a angegeben.

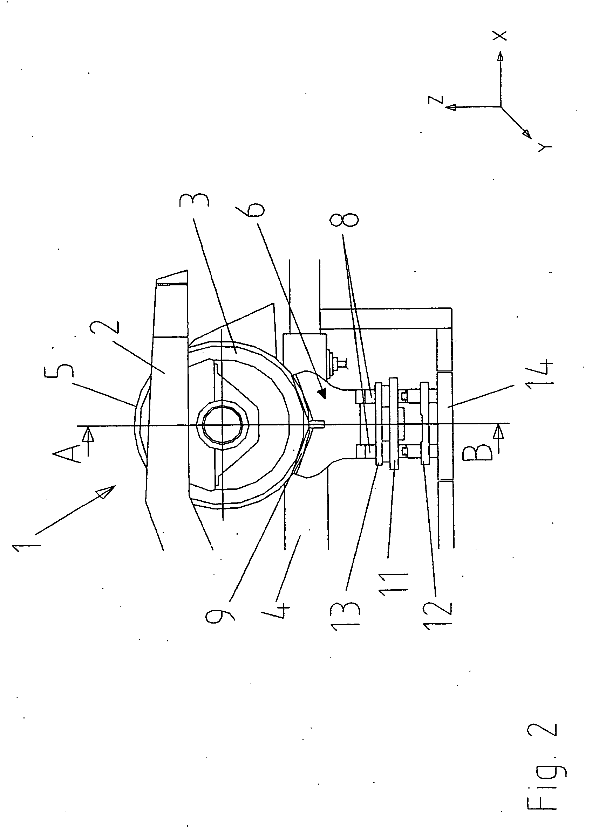

In Fig. 2 ist eine von vier Positioniereinheiten 6 in einer Einzelheit Z nach Fig. 1 dargestellt. In dem Prüfstand 1 ist auf der höhenverstellbaren Einfahrgleisvorrichtung 4 das zu prüfende Drehgestell 2 mit dem jeweiligen Laufrad 3 auf dem Spurkranz 5 zur ungefähren Prüfposition eingebracht.

Die vier Positioniereinheiten 6 sind jeweils mit einem über eine Schwalbenschwanzführung verfahrbaren Y-Schlitten 11 und unteren X-Schlitten 12 sowie mit einer höhenverstellbaren Z-Hubeinrichtung 14 ausgerüstet. Auf dem verfahrbaren Y-Schlitten 11 ist ebenfalls über eine Schwalbenschwanzführung ein sich feinverstellender oberer X-Schlitten 13 angeordnet, auf dem jeweils ein Aufnahmeprisma 9 mit integrierter Messeinrichtung 8 für die Ermittlung der Radaufstandskraft und ein Abstandssensor 10 angebracht sind.

Die vier Positioniereinheiten 6 mit dem Aufnahmeprisma 9 werden jeweils auf den nominellen Achsabstand a des Drehgestells 2 von an den unteren X-Schlitten 12 der Positioniereinheiten 6 angebrachten, nicht dargestellten Stellmotoren voreingestellt. Daraufhin können die Laufräder 3 des Prüflings oder Drehgestells 2 von den Aufnahmeprismen 9 nach Absenken der Einfahrgleisvorrichtung 4 aufgenommen werden. Die nicht dargestellten Stellmotoren für die Positionierung der unteren X-Schlitten 12 der Positioniereinheiten 6 auf den nominellen Achsabstand a erhalten vorbestimmte Signale von einer ebenfalls nicht dargestellten zentralen Steuereinheit.

Beim Absenken des Drehgestells 2 setzen sich die jeweiligen Laufräder 3 zentrisch in die jeweiligen Aufnahmeprismen 9 und positionieren sich die jeweiligen oberen X-Schlitten 13 durch das Eigengewicht des Drehgestells 2. Die Position des oberen X-Schlittens 13 gegenüber der Position des unteren X-Schlittens 12 wird mit Wegsensoren einer Messeinrichtung 15 gemessen und an die nicht dargestellte zentrale Steuereinheit zur Erfassung des genauen Achsabstandes als Ist-Lage gegeben.

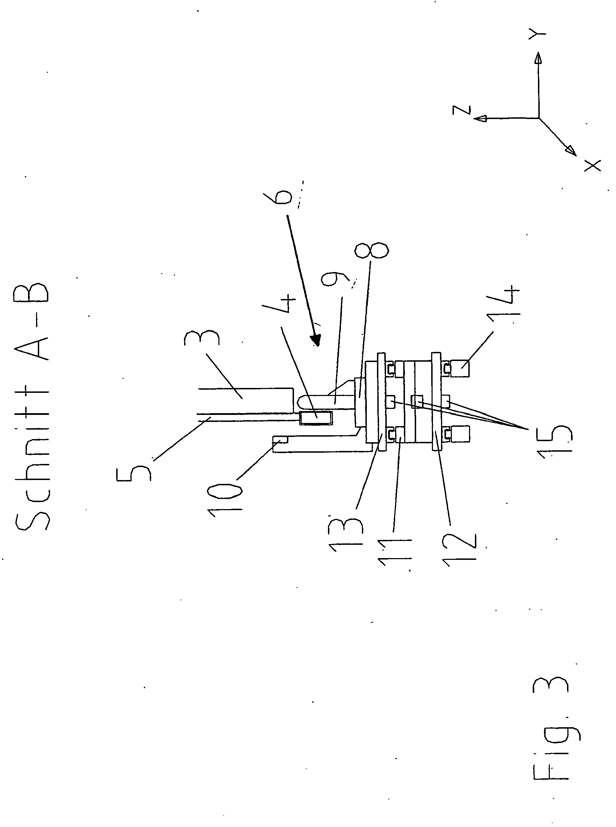

Von dem jeweiligen Abstandsensor 10 wird die Lage des jeweiligen Laufrades 3 bezogen auf die Lage des jeweiligen Aufnahmeprismas 9 als Ist-Lage erfasst (Fig.3). Die erfassten Daten werden an die nicht dargestellte zentrale Steuereinheit weitergeleitet. Die zentrale Steuereinheit erfasst und speichert gegebenenfalls Korrekturgrößen hinsichtlich der Abweichung der Ist-Lage von der vorbestimmten exakten Y-Lage als Soll-Lage der jeweiligen Positioniereinheit 6 gegenüber dem jeweiligen zugehörigen Laufrad 3. Weiterhin liefert die zentrale Steuereinheit Signale zur Verstellung der jeweiligen Positioniereinheit 6 in die Soll-Lage.

Der motorisch verfahrbare Y-Schlitten 11 positioniert die Positioniereinheit 6 mit dem Aufnahmeprisma 9 exakt unter den definierten Aufstellpunkt jedes Laufrades 3 auf dem zugehörigen Messkreisdurchmesser. Zur genauen Positionierung des Y-Schlittens 11 dient ein von der nicht dargestellten zentralen Steuereinheit geliefertes Signal, das aufgrund einer vorher durchgeführten Abstandsmessung mit dem Abstandssensor 10 und Wegmessung mit einer an dem jeweiligen Y-Schlitten 11 angebrachten Messeinrichtung 15 hervorgerufen wird. Dadurch wird auch die genaue Lage des Aufnahmeprismas 9 bezogen auf die zentrale Mittelachse m bekannt. Der Vorgang wird bei allen vier Laufrädern 3 des Prüflings oder Drehgestells 2 zeitgleich durchgeführt.

Der motorisch verfahrbare untere X-Schlitten 12 positioniert die Positioniereinheit 6 in die vorbestimmte grobe X-Lage als Soll-Lage auf dem Prüfstand, und zwar wiederum aufgrund eines vorbestimmten Signals der nicht dargestellten zentralen Steuereinheit. Dann wird nach dem Absenken des Drehgestells 2 und dem Zentrieren in die Aufnahmeprismen 9 die X-Lage fein von der an dem jeweiligen oberen X-Schlitten 13 angebrachten Messeinrichtung 15 gemessen, und zwar als Ist-Lage der Positioniereinheit 6 gegenüber der Position des unteren X-Schlittens 12. Gegebenenfalls wird eine Korrekturgröße in der nicht dargestellten zentralen Steuereinheit für die genaue X-Lage als Soll-Lage für die jeweilige Positioniereinheit 6 gegenüber dem jeweiligen Laufrad 3 des Drehgestells 2 erfasst und als Soll-Lage gespeichert. Der Vorgang wird bei allen vier Laufrädern 3 des Prüflings oder Drehgestells 2 zeitgleich durchgeführt.

Die höhenverstellbare Einfahrgleisvorrichtung 4 wird für die jeweiligen motorischen Verstellungen der Positioniereinheiten 6 in die gemessenen Radpositionen kurzzeitig automatisch gesteuert angehoben und nach den durchgeführten Verstellungen wieder automatisch gesteuert abgesenkt, so dass sich das jeweilige Laufrad 3 des Drehgestells 2 wieder in das zugehörige Aufnahmeprisma 9 einsetzt.

Der feinverstellbare, auf dem Y-Schlitten 11 angebrachte obere X-Schlitten 13 ist in X-Richtung leicht verschiebbar und zentriert sich beim Absetzen des Prüflings oder Drehgestells 2 in das Aufnahmeprisma 9 in die Aufstellposition des Laufrades 3 aufgrund des gegebenen Laufraddurchmessers und des Eigengewichts des Prüflings.

Die Verschiebung in X-Richtung des oberen X-Schlittens 13 wird von der am jeweiligen oberen X-Schlitten 13 angebrachten zugehörigen Messeinrichtung 15 gemessen und von der nicht dargestellten zentralen Steuereinheit zur angefahrenen Position des unteren X-Schlittens 12 nach Fig. 2, 3 addiert oder subtrahiert.

Das Drehgestell 2 wird über die einzelnen unteren X-Schlitten 12 und Y-Schlitten 11 in X- und Y-Richtung so verschoben, dass es nicht nur mit der festen Aufstellposition genau in X- und Y-Richtung positioniert wird, sondern auch durch achsweises Verschieben der Y-Schlitten in Y-Richtung exakt rechtwinklig ausgerichtet wird. Dazu wird die Y-Lage des Drehgestells 2 ohne ein Anheben mittels der motorischen Antriebe innerhalb des Y-Schlittens genau in Prüfstandsmitte gebracht. Die Signale für die Verstellung der einzelnen Schlitten werden von der nicht dargestellten Steuereinheit geliefert, welche die erfassten Daten auswertet und in die erforderlichen Steuerimpulse für die nicht dargestellten Stellmotoren der unteren X-Schlitten 12 und der Y-Schlitten 11 umwandelt.

Das zu prüfende Drehgestell 2 befindet sich nach der Positionierung und Ausrichtung in einer ausgerichteten Prüfposition, die eindeutig geometrisch bestimmt ist.

Die eigentlichen Prüfschritte wie die Achsvermessung und die Prüfung der Radaufstandskraft erfolgen nach der Einstellung der genauen Prüfposition. Das Drehgestell 2 ist nunmehr exakt rechtwinklig und mittig im Prüfstand ausgerichtet, so dass Fehlmessungen ausgeschlossen sind, die sonst die Genauigkeit und Aussagekraft der nachfolgend durchgeführten Messungen beeinflussen.

Dabei ist besonders vorteilhaft, dass die jeweilige Positioniereinheit 6 auch in Z-Richtung verschiebbar angeordnet ist. Sollte bei der Prüfung der Radaufstandskraftverteilung eine vorbestimmte Toleranzgrenze überschritten werden, dann wird mit der an der jeweiligen höhenverstellbaren Z-Hubeinrichtung 14 angebrachten zugehörigen Messeinrichtung 15 eine Abweichung gegenüber der vorbestimmten Position festgestellt. Über eine Simulation in Z-Richtung wird die erforderliche Stärke oder Dicke einer notwendigen Abstandsscheibe zum Höhenausgleich der Radaufhängung von der nicht dargestellten Steuereinheit bestimmt.

Das Verfahren zum Positionieren eines Prüflings in einem Prüfstand für Drehgestelle läuft automatisch gesteuert wie folgt ab:

Zuerst werden die Positioniereinheiten 6 mit den Aufnahmeprismen 9 für die Laufräder 3 auf den vorbestimmten nominellen Achsabstand a über die motorisch verstellbaren unteren X-Schlitten 12 voreingestellt. Dann wird das Drehgestell 2 auf dem Spurkranz 5 der jeweiligen Laufräder 3 über die höhenverstellbare Einfahrgleisvorrichtung 4 in den Prüfstand 1 eingefahren. Anschließend wird die Einfahrgleisvorrichtung 4 abgesenkt, wobei sich die jeweiligen Laufräder 3 in die vorgesehenen Aufnahmeprismen 9 legen und sich die oberen X-Schlitten 13 der Positioniereinheiten 6 exakt in Achsmitte zentrieren.

Nachfolgend messen die jeweiligen Abstandssensoren 10, die jeweils an den oberen X-Schlitten 13 angebracht sind, die ihrerseits auf den Y-Schlitten 11 der Positioniereinheiten 6 angeordnet sind, jeweils die Y-Lage jedes Laufrades 3 bezogen auf die Lage des zugehörigen Aufnahmeprismas 9 als Ist-Lage. Die jeweils am Y-Schlitten 11 angebrachte Messeinrichtung 15 misst die Y-Lage des Y-Schlittens 11 jeder Positioniereinheit 6 gegenüber dem zugehörigen Laufrad 3 des Drehgestells 2 als Ist-Lage. Die gemessenen Daten werden der nicht dargestellten zentralen Steuereinheit zugeleitet, die Korrekturgrößen für die exakte Y-Lage des Y-Schlittens der jeweiligen Positioniereinheiten 6 gegenüber den zugehörigen Laufrädern 3 erfasst und als Soll-Lage speichert. Dann wird das Drehgestell 2 über die Einfahrgleisvorrichtung 4 angehoben. Anschließend wird der Y-Schlitten 11 der jeweiligen Positioniereinheit 6 in die genau erfasste Y-Lage als Soll-Lage auf ein von der nicht dargestellten Steuereinheit geliefertes Signal hin motorisch verstellt.

Danach wird das Drehgestell 2 wieder über die Einfahrgleisvorrichtung 4 in die Aufnahmeprismen 9 abgesenkt.

Darauffolgend wird von der an dem jeweiligen oberen X-Schlitten 13 angebrachten zugehörigen Messeinrichtung 15 die X-Lage des oberen X-Schlittens 13 der jeweiligen Positioniereinheit 6 gegenüber einer Abweichung der Position des oberen X-Schlittens 13 von der Position des unteren X-Schlittens 12 als Ist-Lage gemessen. Wiederum werden die gemessenen Daten der nicht dargestellten Steuereinheit zugeleitet, die Korrekturgrößen für die genaue X-Lage als Soll-Lage der jeweiligen Positioniereinheit 6 für das jeweilige Laufrad 3 des Drehgestells 2 im Prüfstand 1 erfasst und speichert. Anschließend wird auf ein von der nicht dargestellten Steuereinheit geliefertes Signal der untere X-Schlitten 12 der jeweiligen Positioniereinheit 6 in die erfasste X-Lage als Soll-Lage und der Y-Schlitten in Y-Richtung zur exakten rechtwinkligen Ausrichtung ohne ein Anheben des Drehgestells 2 motorisch verstellt.

Das Drehgestell 2 ist nunmehr exakt ausgerichtet und für die eigentlichen Prüfungen, beispielsweise die Ermittlung der Radaufstandskräfte und der Achsparallelität, vorbereitet.

## Patentansprüche

1. Verfahren zum Positionieren eines Prüflings in einem Prüfstand (1) für Drehgestelle (2) von Schienenfahrzeugen, wobei die Drehgestelle (2) mit Laufrädern (3) mit angeformten Spurkränzen (5) jeweils auf einer höhenverstellbaren Einfahrgleisvorrichtung (4) in den Prüfstand eingebracht und ausgebracht werden und der Prüfstand (1) mindestens vier Positioniereinheiten (6) und eine Belastungsvorrichtung (7) aufweist, mit folgenden Schritten:
Untere X-Schlitten (12) der Positioniereinheiten (6) mit unverschobenen Y-Schlitten (11) und oberen X-Schlitten (13) und angeordneten Aufnahmeprismen (9) für die Laufräder (3) werden auf einen vorbestimmten nominellen Achsabstand (a) positioniert;
das Drehgestell (2) wird auf den Spurkränzen (5) der Laufräder (3) über die Einfahrgleisvorrichtung (4) in den Prüfstand (1) eingefahren;
die Einfahrgleisvorrichtung (4) wird abgesenkt und die Laufräder (3) werden von den Aufnahmeprismen (9) aufgenommen, und die oberen X-Schlitten (13) der Positioniereinheiten (6) werden hierdurch exakt in Achsmitte zentriert;
ein am jeweiligen oberen X-Schlitten (13), der seinerseits auf dem Y-Schlitten (11) der Positioniereinheiten (6) angeordnet ist, angebrachter Abstandssensor (10) misst die Y-Lage jedes Laufrades (3) bezogen auf die Lage des jeweiligen Aufnahmeprismas (9) als Ist-Lage;
eine jeweils am Y-Schlitten (11) angebrachte Messeinrichtung (15) misst die Y-Lage des Y-Schlittens (11) jeder Positioniereinheit (6) gegenüber dem zugehörigen Laufrad (3) des Drehgestells (2) als Ist-Lage;
für die exakte Y-Lagedes Y-Schlittens (11) der jeweiligen
Positioniereinheit (6) gegenüber dem jeweiligen Laufrad (3) werden in einer zugehörigen zentralen Steuereinheit die gemessenen Daten verarbeitet und Korrekturgrößen erfasst und als Soll-Lage gespeichert;
das Drehgestell (2) wird durch die Einfahrgleisvorrichtung (4) angehoben;
der Y-Schlitten (11) der jeweiligen Positioniereinheit (6) wird auf ein vorbestimmtes Signal der Steuereinheit hin exakt in die erfasste Y-Lage als Soll-Lage motorisch verstellt;
das Drehgestell (2) wird durch die Einfahrgleisvorrichtung (4) wieder in die Aufnahmeprismen (9) abgesenkt;
eine Messeinrichtung (15) am jeweiligen oberen X-Schlitten (13) der jeweiligen Positioniereinheit (6) misst die jeweilige X-Lage des oberen X-Schlittens (13) der jeweiligen Positioniereinheit (6) gegenüber der Position des unteren X-Schlittens (12) der Positioniereinheit (6) als Ist-Lage;
die zentrale Steuereinheit erfasst und speichert aufgrund der gemessenen Daten der X-Lage notwendige Korrekturgrößen für die genaue X-Lage der Positioniereinheiten (6) gegenüber den Laufrädern (3) des Drehgestells (2) im Prüfstand (1) als Soll-Lage;
der untere X-Schlitten (12) der jeweiligen Positioniereinheit (6) wird auf ein vorbestimmtes Signal der Steuereinheit hin exakt in die erfasste X-Lage als Soll-Lage und der Y-Schlitten in Y-Richtung zur exakt rechtwinkligen Ausrichtung ohne ein Anheben des Drehgestells (2) motorisch verstellt.

2. Verfahren nach Anspruch 1, **dadurch gekennzeichnet, dass** beim Überschreiten einer vorbestimmten Toleranzgrenze bei der Messung der Radaufstandskräfte über eine Messeinrichtung (8) durch Beaufschlagung des Drehgestells (2) im Prüfstand (1) mit der Belastungsvorrichtung (7) die an Z-Hubeinrichtungen (14) der jeweiligen Positioniereinheiten (6) jeweils angebrachte Messeinrichtung (15) eine Abweichung in Z-Richtung gegenüber einer vorbestimmten Position erfasst und dass über eine Simulation der Abweichung in Z-Richtung die erforderliche Stärke oder Dicke einer Abstandsscheibe zum Höhenausgleich der Radaufhängung von der zentralen Steuereinheit bestimmt wird.

3. Vorrichtung zum Positionieren eines Prüflings in einem Prüfstand (1) für Drehgestelle (2) von Schienenfahrzeugen, wobei die Drehgestelle (2) mit Laufrädern (3) mit angeformten Spurkränzen (5) jeweils auf einer höhenverstellbaren Einfahrgleisvorrichtung (4) in den Prüfstand einbringbar und ausbringbar sind und der Prüfstand (1) mindestens vier Positioniereinheiten (6) und eine Belastungsvorrichtung (7) aufweist, zur Durchführung eines Verfahrens nach Anspruch 1, **dadurch gekennzeichnet, dass** die Positioniereinheiten (6) jeweils ein Aufnahmeprisma (9) mit einer integrierten Messeinrichtung (8) umfassen, dass die Positioniereinheiten (6) jeweils einen Y-Schlitten (11) und einen unteren und oberen X-Schlitten (12, 13) aufweisen, dass auf dem unteren X-Schlitten (12) der Y-Schlitten (11) und auf dem Y-Schlitten (11) der obere X-Schlitten (13) angeordnet sind, dass an dem oberen X-Schlitten (13) jeweils ein Abstandssensor (10) und eine Messeinrichtung (15) zur Wegmessung angebracht sind und die Y-Schlitten (11) und unteren und oberen X-Schlitten (12, 13) jeweils mit der Messeinrichtung (15) zur Wegmessung ausgerüstet sind, wobei eine zentrale Steuereinheit zum Verarbeiten von gemessenen Daten und Erfassen von Korrekturgrößen und Speichern von zughörigen Ist-/Soll-Lagen vorgesehen ist.

4. Vorrichtung nach Anspruch 3, **dadurch gekennzeichnet, dass** jeweils auf dem oberen X-Schlitten (13) die Messeinrichtung (8) für die Kraftmessung und darauf das Aufnahmeprisma (9) angeordnet sind und dass seitlich am oberen X-Schlitten (13) auf der Innenseite oberhalb des Aufnahmeprismas (9) und der dazwischen vorgesehenen Einfahrgleisvorrichtung (4) der Abstandssensor (10) angebracht ist.

5. Vorrichtung nach Anspruch 3, **dadurch gekennzeichnet, dass** die Positioniereinheiten (6) jeweils mit einer Z-Hubeinrichtung (14) ausgerüstet sind.

6. Vorrichtung nach Anspruch 5, **dadurch gekennzeichnet, dass** die Z-Hubeinrichtung (14) entlang der Z-Achse höhenverstellbar angeordnet ist.

7. Vorrichtung nach Anspruch 5, **dadurch gekennzeichnet, dass** die Z-Hubeinrichtungen (14) jeweils mit einer Messeinrichtung (15) zur Wegmessung ausgerüstet sind.

8. Vorrichtung nach Anspruch 3, **dadurch gekennzeichnet, dass** die Aufnahmeprismen (9) in Kombination mit der freien Verschiebbarkeit des oberen X-Schlittens (13) sich selbst zentrierend angeordnet sind.

9. Vorrichtung nach Anspruch 3, **dadurch gekennzeichnet, dass** die Y-Schlitten (11) und die unteren X-Schlitten (12) motorisch verstellbar angeordnet sind.

10. Vorrichtung nach Anspruch 3, **dadurch gekennzeichnet, dass** die Y-Schlitten (11) und unteren und oberen X-Schlitten (12, 13) jeweils eine Schwalbenschwanzführung aufweisen.

## Claims

1. Method for positioning of a test specimen in a test stand (1) for bogies (2) of rail vehicles, wherein the bogies (2) with running wheels (3) having moulded-on wheel flanges (5) are each brought into and out of the test stand on a height-adjustable drive-in track device (4) and the test stand (1) comprises at least four positioning units (6) and a loading device (7) with the following steps:
Lower X-slides (12) of the positioning units (6) with undisplaced Y-slides (11) and upper X-slides (13) and arranged mounting prisms (9) for the running wheels (3) are positioned in a predetermined nominal axle spacing (a);
the bogie (2) is driven into the test stand (1) via the drive-in track device (4) on the wheel flanges (5) of the running wheels (3);
the drive-in track device (4) is lowered and the running wheels (3) are accommodated by the mounting prisms (9) and the upper X-slides (13) of the positioning units (6) are thus centred exactly in axle centre;
a spacing sensor (10) attached on the respective upper X-slide (13), which in turn is arranged on the Y-slide (11) of the positioning units (6), measures the Y-position of each running wheel (3) with respect to the position of the respective mounting prism (9) as actual position;
a measuring device (15) attached in each case to the Y-slide (11) measures the Y-position of the Y-slide (11) of each positioning unit (6) with respect to the corresponding running wheel (3) of the bogie (2) as actual position;
for the exact Y-position of the Y-slide (11) of the respective positioning unit (6) relative to the respective running wheel (3), the measured data is processed and correction quantities sensed and stored as set position in an associated central control unit;
the bogie (2) is lifted by the drive-in track device (4) ;
the Y-slide (11) of the respective positioning unit (6) upon a predetermined signal of the control unit is motor driven adjusted exactly in the sensed Y-position as set position;
the bogie (2) is again lowered into the mounting prisms (9) by the drive-in track device (4);
a measuring device (15) on the respective upper X-slide (13) of the respective positioning unit (6) measures the respective X-position of the upper X-slide (13) of the respective positioning unit (6) relative to the position of the lower X-slide (12) of the positioning unit (6) as actual position;
the central control unit, based on the measured data of the X-position, senses and stores necessary correction quantities for the exact X-position of the positioning units (6) relative to the running wheels (3) of the bogie (2) in the test stand (1) as set position;
the lower X-slide (12) of the respective positioning unit (6) upon a predetermined signal of the control unit is motor driven adjusted exactly into the sensed X-position as set position and the Y-slide in Y-direction for the exact right-angle orientation without lifting the bogie (2).

2. Method according to Claim 1, **characterized in that** upon exceeding of a predetermined tolerance limit during the measurement of the wheel contact forces via a measuring device (8) through loading of the bogie (2) in the test stand (1) with the loading device (7) the measuring device (15) attached to Z-lifting devices (14) of the respective positioning units (6) a deviation in Z-direction with respect to a predetermined position is sensed and that via a simulation of the deviation in Z-direction the required strength or thickness of a spacer shim for the height equalisation of the wheel suspension is determined by the central control unit.

3. Device for the positioning of a test specimen in a test stand (1) for bogies (2) of rail vehicles, wherein the bogies (2) with running wheels (3) with moulded-on wheel flanges (5) can each be brought into and brought out of the test stand on a height-adjustable drive-in track device (4) and the test stand (1) comprises at least four positioning units (6) and a loading device (7) for carrying out a method according to Claim 1, **characterized in that** the positioning units (6) each comprise a mounting prism (9) with an integrated measuring device (8), **in that** the positioning units (6) each comprise a Y-slide (11) and a lower and upper X-slide (12, 13), **in that** on the lower X-slide (12) the Y-slide (11) and on the Y-slide (11) the upper X-slide (13) are arranged, **in that** on the upper X-slide (13) a spacing sensor (10) and a measuring device (15) each for path measurement are attached and the Y-slides (11) and lower and upper X-slides (12, 13) are each equipped with the measuring device (15) for the path measurement, wherein a central control unit for the processing of measured data and sensing of correction quantities and storing of corresponding actual/set positions is provided.

4. Device according to Claim 3, **characterized in that** in each case on the upper X-slide (13) the measuring device (8) for the force measurement and thereupon the mounting prism (9) are arranged and that laterally on the upper X-slide (13) on the inner side above the mounting prism (9) and the drive-in track device (4) provided in-between, the spacing sensor (10) is attached.

5. Device according to Claim 3, **characterized in that** the positioning units (6) are each equipped with a Z-lifting device (14).

6. Device according to Claim 5, **characterized in that** the Z-lifting device (14) is arranged adjustable in height along the Z-axis.

7. Device according to Claim 5, **characterized in that** the Z-lifting devices (14) are each equipped with a measuring device (15) for path measurement.

8. Device according to Claim 3, **characterized in that** the mounting prisms (9) in combination with the free displaceability of the upper X-slide (13) are arranged in a self-centring manner.

9. Device according to Claim 3, **characterized in that** the Y-slides (11) and the lower X-slides (12) are arranged in a motor driven adjustable manner.

10. Device according to Claim 3, **characterized in that** the Y-slides (11) and lower and upper X-slides (12, 13) each comprise a dovetail guide.

## Revendications

1. Procédé de positionnement d'un échantillon dans un banc d'essai (1) pour bogies (2) de véhicules ferroviaires, les bogies (2) pourvus de roues de roulement (3) sur lesquelles sont formés des boudins (5) étant introduits dans et sortis du banc d'essai respectivement sur un dispositif de voie d'entrée (4) dans le banc d'essai et le banc d'essai (1) présentant au moins quatre unités de positionnement (6) et un dispositif de chargement (7), par les étapes suivantes :
les chariots inférieurs X (12) des unités de positionnement (6) accompagnés des chariots inférieurs non déplacés Y et des chariots supérieurs X (13) et des prismes récepteurs installés (9) pour les roues de roulement (3) sont positionnés sur un entraxe nominal prédéfini des essieux (a) ;
le bogie (2) est rentré sur les boudins (5) des roues de roulement (3) via le dispositif de voie d'entrée (4) dans le banc d'essai (1) ;
le dispositif de voie d'entrée (4) est abaissé et les roues de roulement (3) sont reçues par les prismes récepteurs (9) et les chariots supérieurs X (13) des unités de positionnement (6) sont ainsi centrés précisément au centre de l'essieu ;
un capteur de distance (10) installé sur le chariot supérieur X respectif (13), qui est de son côté disposé sur le chariot Y (11) des unités de positionnement (6), mesure la position Y de chaque roue de roulement (3) par rapport à la position du prisme récepteur respectif (9) en tant que position réelle ;
un dispositif de mesure (15) installé respectivement sur le chariot Y (11) mesure la position Y du chariot Y (11) de chaque unité de positionnement (6) par rapport à la roue de roulement correspondante (3) du bogie (2) en tant que position réelle ;
pour la position Y précise du chariot Y (11) de l'unité de positionnement respective (6) par rapport à la roue de roulement respective (3), les données mesurées sont traitées et des valeurs correctives sont enregistrées et enregistrées en tant que valeurs théoriques dans l'unité de commande centrale correspondante ;
le bogie (2) est soulevé par le dispositif de voie d'entrée (4) ;
le chariot Y (11) de l'unité de positionnement respective (6), sur signal prédéfini de l'unité de commande, est déplacé précisément vers la position Y déterminée en tant que position théorique de façon motorisée ;
le bogie (2) est de nouveau abaissé par le dispositif de voie d'entrée (4) dans les prismes récepteurs (9) ;
un dispositif de mesure (15) situé sur le chariot supérieur respectif X (13) mesure la position X respective du chariot supérieur X (13) de l'unité de positionnement respective (6) par rapport à la position du chariot inférieur X (12) de l'unité de positionnement (6) en tant que position réelle ;
l'unité de commande centralisée détermine et enregistre, à partir des données mesurées de la position X, des valeurs correctives nécessaires pour la position X précise des unités de positionnement (6) par rapport aux roues de roulement (3) du bogie (2) dans le banc d'essai (1) en tant que position théorique ;
le chariot inférieur X (12) de l'unité de positionnement respective (6), sur signal prédéfini de l'unité de commande, est déplacé précisément vers la position X déterminée en tant que position théorique et le chariot Y est déplacé dans le sens Y pour alignement précisément orthogonal sans levage du bogie (2) de façon motorisée.

2. Procédé selon la revendication 1, **caractérisé en ce que**, en cas de dépassement d'une limite de tolérance prédéfinie lors de la mesure des forces de contact des roues par un dispositif de mesure (8) par sollicitation du bogie (2) dans le banc d'essai (1) à l'aide du dispositif de chargement (7), le dispositif de mesure (15) installé respectivement sur des systèmes de levage Z (14) des unités de positionnement respectives (6), un écart dans le sens Z par rapport à une position prédéfinie est déterminé et, par simulation de l'écart dans le sens Z, l'épaisseur nécessaire d'une entretoise permettant une compensation de hauteur de la suspension des roues est définie par l'unité de commande centralisée.

3. Dispositif de positionnement d'un échantillon dans un banc d'essai (1) pour bogies (2) de véhicules ferroviaires, les bogies (2) pourvus de roues de roulement (3) sur lesquelles sont formés des boudins (5) pouvant être installés dans et sortis respectivement sur un dispositif de voie d'entrée réglable en hauteur (4) dans le banc d'essai et le banc d'essai (1) présentant au moins quatre unités de positionnement (6) et un dispositif de chargement (7), pour la réalisation d'un procédé selon la revendication 1, **caractérisé en ce que** les unités de positionnement (6) comprennent respectivement un prisme récepteur (9) avec dispositif de mesure intégré (8), que les unités de positionnement (6) comportent respectivement un chariot Y (11) et un chariot inférieur et supérieur X (12, 13), que le chariot Y (11) est disposé sur le chariot inférieur X (12) et le chariot supérieur X (13) sur le chariot Y (11), que, sur le chariot supérieur X (13) respectivement un capteur de distance (10) et un dispositif de mesure (15) pour mesurer la course sont installés et que les chariots Y (11) et les chariots inférieurs et supérieurs X (12, 13) sont équipés respectivement du dispositif de mesure (15) pour mesurer la course, une unité de commande centralisée étant prévue pour traiter les données mesurées et déterminer les valeurs de correction et enregistrer les positions réelles/théoriques correspondantes.

4. Dispositif selon la revendication 3, **caractérisé en ce qu'**est installé respectivement sur le chariot supérieur X (13) le dispositif de mesure (8) pour mesurer la force et par-dessus le prisme récepteur (9) et que, sur le côté du chariot supérieur X (13), sur la face interne, au dessus du prisme récepteur (9) et du dispositif de voie d'entrée (4) prévu dans l'intervalle, est installé le capteur de distance (10).

5. Dispositif selon la revendication 3, **caractérisé en ce que** les unités de positionnement (6) sont équipées respectivement d'un dispositif de levage Z (14).

6. Dispositif selon la revendication 5, **caractérisé en ce que** le dispositif de levage Z (14) est disposé de manière à être réglable en hauteur le long de l'axe Z.

7. Dispositif selon la revendication 5, **caractérisé en ce que** les dispositifs de levage Z (14) sont équipés respectivement d'un dispositif de mesure (15) pour mesurer la course.

8. Dispositif selon la revendication 3, **caractérisé en ce que** les dispositifs récepteurs (9) sont disposés de manière à s'autocentrer en combinaison avec la mobilité libre du chariot supérieur X (13).

9. Dispositif selon la revendication 3, **caractérisé en ce que** les chariots Y (11) et les chariots inférieurs X (12) sont disposés de manière à être mobiles par système motorisé.

10. Dispositif selon la revendication 3, **caractérisé en ce que** les chariots Y (11) et les chariots inférieurs et supérieurs X (12, 13) présentent respectivement un guide en queue de cygne.
